(19)

**Europäisches Patentamt**
**European Patent Office**
**Office européen des brevets**

(11) **EP 4 729 927 A1**

(12) # EUROPEAN PATENT APPLICATION

(43) Date of publication:
**22.04.2026 Bulletin 2026/17**

(21) Application number: **25209622.7**

(22) Date of filing: **17.10.2025**

(51) International Patent Classification (IPC):
**G01N 21/47** (2006.01)    **G01N 21/84** (2006.01)
**G01N 15/08** (2006.01)

(52) Cooperative Patent Classification (CPC):
**G01N 21/4788; G01N 15/088; G01N 21/8422;**
G01N 2015/0846; G01N 2021/479; G01N 2201/062;
G01N 2201/1296

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **18.10.2024 SK 500592024**

(71) Applicant: **Ustav informatiky Slovenskej akademie vied verejna vyskumna institucia 845 07 Bratislava (SK)**

(72) Inventors:
• **Malik, Peter**
  **831 01 Bratislava (SK)**
• **Klarak, Jaromir**
  **027 12 Liesek (SK)**
• **Kristofik, Stefan**
  **934 01 Levice (SK)**

(74) Representative: **Majlingová, Zuzana Majlingová & Partners, s.r.o. Budatínska 12 851 06 Bratislava (SK)**

(54) **COMPUTER-IMPLEMENTED METHOD FOR NON-DESTRUCTIVE DETERMINATION OF THE POROSITY OF A THIN LAYER BASED ON STATIC VISUAL DATA FROM LASER SPECKLE PHOTOMETRY**

(57)    The invention relates to a computer-implemented method for non-destructive determination of the porosity of a thin layer, which comprises the following steps: (a) acquiring static visual data of the Laser type and the LED type from a laser speckle photometry device arranged to illuminate the surface of the thin layer by a laser and an LED and to capture the reflected light field; and (b) processing the acquired data in a computing unit, wherein the processing includes a spatial synchronization of the Laser-type data and the LED-type data; a reduction of channels of the Laser-type data and the LED-type data into monochromatic single-channel data if the acquired data are in a multichannel format; a generation of three-channel data, wherein one channel comprises monochromatic Laser-type data, a second channel comprises monochromatic LED-type data, and a third channel is null; an extraction of data patterns; a normalization of data patterns; and processing of the normalized data patterns using a trained, validated and tested regression neural network, wherein the output of processing is the porosity value of the thin layer.

EP 4 729 927 A1

**Description**

**Field of the Invention**

The invention relates to the field of imaging technology and computer-implemented processing of acquired data. The primary objective is to determine the porosity value of an observed surface using a device based on the principle of laser speckle photometry (hereinafter referred to as the *LSP device*). The invention is applicable in industrial environments as an inspection system for monitoring the porosity and surface quality of deposited thin layers, for example, in the production of electrodes for the battery industry.

**Background of the Invention**

Current literature concerning the determination of porosity in thin layers deposited on electrodes focuses mainly on standard laboratory methods used in scientific research. One of the basic methods is atomic force microscopy (AFM) [1], [2]. This method provides a three-dimensional surface image of the observed area with very high resolution in the nanometer range. Its advantage lies in high accuracy; however, disadvantages arise from the long measurement time, the requirement for laboratory conditions, and the fact that the porosity value is derived solely from mathematical relations. Another method used more frequently is X-ray microtomography (XRM). This approach to porosity monitoring is very effective but is mainly limited to laboratory evaluation [3]. In addition, this solution represents a destructive method, as it requires obtaining a sample and subsequently analysing it. The principle of porosity calculation using XRM is described in patent document US8542793B1, which employs an X-ray tomography device. Porosity is determined as the percentage ratio of the pore volume to the total volume of the measured sample, multiplied by 100 (Equation (1)). The result represents the percentage of pore volume ($V_{pores}$) relative to the total volume of the measured sample ($V_{sample}$).

$$porosity[\%] = \frac{V_{pores}}{V_{sample}} * 100 \qquad (1)$$

Patent document US11796442B2 describes a method for deriving the porosity value of a monitored object from its measured weight and thickness. The porosity value is determined as the ratio of these two parameters with appropriate coefficients. The disadvantage of this method lies in the need to measure the mass of the object, especially when applied to a conveyor belt or continuous production line. A limitation also occurs when applied to additive manufacturing processes, where successive layers of material are deposited and it is necessary to determine the porosity only of the most recently applied layer. In such cases, determining the mass of the evaluated thin layer becomes significantly complicated.

The optical method for calculating the porosity of a thin layer is based on the resonant frequency of electromagnetic radiation. This method is described in patent document CN108332674B. The method is suitable for thin layers exhibiting optical properties. Its principle lies in recording two resonant wavelengths, on the basis of which the thickness and porosity of a thin layer of a translucent material are evaluated. The applicability of this method is limited exclusively to specific types of translucent materials.

Another optical method is described in patent document US11654635B2. The primary objective of the described method is a non-destructive inspection of the surface of a powder layer commonly used in additive manufacturing technologies. The purpose is the correct identification of defects in the powder layer. This method is based on irradiating the surface with electromagnetic radiation and simultaneously detecting the propagation of heat through the emission of electromagnetic radiation from the irradiated surface. As a result of irradiation, the surface characteristics change, representing a collection of metal powder grains characterized by a certain degree of porosity. The device consists of two lasers emitting wavelengths of 488 nm and 532 nm. The device also includes optical components and a detector.

Patent document EP4060766A1 describes a computer-implemented evaluation of the porosity of deposited layers for electrodes using a non-destructive approach. The document discloses a method for producing an electrode, where the principle of porosity evaluation is based on collecting data from a laser imaging device and a porosity-measuring device. The purpose of the laser imaging device is to map the topography of the evaluated layer. The term "porosity-measuring device" refers to instruments such as an ultrasonic measurement unit, an X-ray method, or a computed tomograph. The generation of the porosity value from these devices is described as a value obtained from a trained model. The document does not provide any further specific information and remains vague regarding the mentioned devices or methods for porosity inspection of deposited layers integrated directly into manufacturing systems. In the case of the ultrasonic method, the problem may lie in obtaining sufficient data quality. In the X-ray method, issues may also arise due to the composite structure of the examined material. In the case of tomography, such a solution is not particularly suitable because it requires creating a 3D image that demands specialized equipment. Moreover, acquisition, operation, and maintenance of such a system involve disproportionately high financial costs.

Surface imaging for the purpose of generating a 3D image of the scanned surface is presented in patent document US9116504B2. This method can also be applied as an indirect approach to calculating the porosity of the examined surface, similar to the AFM method. The patent describes a device consisting of a light unit in the form of a line-illuminating laser and three camera units. Based on the different positions of the camera units, the optical assembly, and the unification method, a 3D image of the scanned surface is created from 2D visual data. This device generates 3D data representing the surface topography. Determining porosity may be more difficult in the case of surfaces composed of particles smaller than or up to 50 micrometres. In such cases, the topography of the scanned surface may be approximated as a simple planar topography.

Patent document US11181363B2 discloses a device for measuring the surface topography. The device operates by emitting multiple types of electromagnetic radiation differing in wavelength. Each wavelength exhibits its own characteristics depending on diffraction and reflectivity. The detectors capture the reflected waves, based on which the properties of the examined surface are determined.

Construction and operating principle of devices based on laser speckle photometry (LSP) are described in patent documents WO2023017029A1 and EP4163624A1. Patent document WO2023017029A1 focuses on the detection of defects on the examined surface. The surface is excited by energy from a laser, and the optical speckle characteristics of the surface are recorded using a detector. Based on a formula derived from differences in the excitation process, areas with a disrupted surface structure are highlighted.

Patent document EP4163624A1 describes a device and a method for detecting defects and determining the porosity of the examined thin layer. The principle is based on two implementations of laser speckle photometry, where the first implementation is based on generating so-called static data, and the second on generating dynamic data. The static data are obtained from line scanning of a surface that is excited by a line laser and simultaneously illuminated by an intense line light. The dynamic data are obtained in the form of two-dimensional imaging, where the essential aspect is the recording of changes in the topography of the examined surface during point excitation of a very small area of the surface. Each method generates specific data characteristics, based on which the individual monitored properties of the examined surface can be identified.

[1] Z. Zhang et al., "Characterizing Batteries by In Situ Electrochemical Atomic Force Microscopy: A Critical Review," Adv. Energy Mater., vol. 11, no. 38, p. 2101518, Oct. 2021, doi: 10.1002/AENM.202101518.

[2] S. Y. Luchkin, S. A. Lipovskikh, N. S. Katorova, A. A. Savina, A. M. Abakumov, and K. J. Stevenson, "Solid-electrolyte interphase nucleation and growth on carbonaceous negative electrodes for Li-ion batteries visualized with in situ atomic force microscopy," doi: 10.1038/s41598-020-65552-6.

[3] U. Klement, J. Ekberg, and S. T. Kelly, "3D Analysis of Porosity in a Ceramic Coating Using X-ray Microscopy," J. Therm. Spray Technol., vol. 26, no. 3, pp. 456-463, Feb. 2017, doi: 10.1007/S11666-017-0532-Y/FIGURES/9.

## Summary of the Invention

The subject-matter of the invention is a computer-implemented method for non-destructive determination of the porosity value of a thin layer based on static visual data obtained from a device operating on the principle of laser speckle photometry (LSP device). The method involves the collection and evaluation of specific data acquired from the mentioned LSP device.

The computer-implemented method for non-destructive determination of the porosity value of a thin layer comprises, or consists of, the following steps carried out in chronological order:

(a) acquiring static visual data of the Laser type and LED type from a laser speckle photometry device arranged to illuminate the surface of the thin layer using a laser and an LED and to capture the reflected light field;

(b) processing the acquired data in a computing unit, wherein the processing includes:

- spatial synchronization of the Laser-type data and the LED-type data;
- reduction of the channels of the Laser-type data and LED-type data into monochromatic single-channel data, if the acquired data are in a multichannel format, whereas in the case of single-channel data, the reduction is not performed;
- generation of three-channel data, wherein one channel contains monochromatic Laser-type data, the second channel contains monochromatic LED-type data, and the third channel is a null channel;
- extraction of data patterns;
- normalization of data patterns; and
- processing of the normalized data patterns using a trained, validated, and tested regression neural network, the output of which is the (predicted) porosity value of the thin layer.

The Laser-type data and LED-type data obtained in step (a) represent the reflective and topographic properties of the surface of the thin layer.

The step of spatial synchronization includes establishing a spatial correspondence between the Laser-type data and the LED-type data based on the matching spatial position of pixels in the image of the inspected thin layer, where the data are represented as pixel matrices $P_{i,j}$. Synchronization is achieved by aligning the corresponding pixels of both image matrices so that each pixel position in the LED-type data corresponds to the same surface position of the thin layer as the pixel position in the Laser-type data.

The step of data channel reduction serves to convert the data from a multichannel format into a single-channel format, thereby reducing the volume of processed data without losing relevant information about the surface topography of the thin layer. This step is not mandatory and may be omitted if the input data from the LSP device are already in a single-channel format.

The step of generating three-channel data includes creating a common data structure in which the LED-type data and the Laser-type data are combined so that, for each pixel position, the values of both data types are stored in separate channels of a shared three-channel image, while the third channel is empty or null. This ensures spatial correspondence between data originating from different illumination sources and creates a unified data format suitable for further processing. A three-channel format is used because it corresponds to the standard input format of image-based networks, thereby ensuring compatibility and allowing subsequent processing without the need for additional data structure adjustments.

The step of data pattern extraction includes dividing the data into individual patterns of defined size (determined by the parameters of the input layer of the regression neural network), thereby creating data samples that represent the local physical properties of the surface.

The step of data pattern normalization includes converting the pixel values from the range 0-255 into the range 0-1, thereby creating normalized data patterns suitable for use as input data for the regression neural network. The regression neural network comprises an input layer, at least one convolutional layer, and at least one regression layer arranged so as to determine the porosity value of the thin layer from the normalized data patterns.

The step of data processing using a trained, validated, and tested regression neural network includes:

- processing the normalized data patterns by the input layer of the neural network,
- processing the outputs from the input layer of the neural network by the convolutional layers of the neural network,
- processing the outputs from the convolutional layers of the neural network by the regression layers of the neural network, and
- recording the resulting value and displaying it in a predefined format,

wherein the output of the data processing by the regression neural network is the determined porosity value of the thin layer. In this way, the porosity can be determined for all locations represented by the data patterns.

Description of the Procedure for Determining the Porosity Value of the Examined Sample:
The LSP device comprises at least one laser, referred to as *Laser illumination,* for illuminating the observed surface, and a detector in the form of a camera device. The LSP device may advantageously include an additional laser - a *heating laser-* intended for thermal excitation of the material surface. The LSP device also includes *LED illumination,* which ensures that the scanned area is illuminated with intense (red monochromatic) light. In this way, two types of illumination data of the observed surface are produced - *LED-type data* and *Laser-type data.* The scanning process is based on sequential illumination of the inspected surface using either Laser illumination or LED illumination, with this process being recorded by the camera device. The set of data capturing the inspected surface illuminated by Laser illumination can be described as data with highly emphasized regions representing the microfacets of the observed sample. The set of data capturing the inspected surface illuminated by LED illumination can be described as data emphasizing the topography or geometric relief of the inspected surface. The inspected surface forms part of a controlled layer of a deposited material having a certain porosity value. The term *porosity value* refers to the ratio of unfilled volume to the total volume of the layer (expressed in vol.%), while only the surface of this layer is scanned. Porosity arises from the deposition of material composed of microparticles of various sizes, depending on the manufacturing technology of the material for the given layer. When such a material with microparticles is deposited, the space of the layer is not completely filled with these particles, leaving a certain unfilled volume within the layer. The microparticles on the surface of the layer appear as microfacets of the observed sample highlighted by Laser illumination. The shape and distribution of these facets are almost random and do not provide complete information about the surface or the size of the microparticles. For this reason, the surface is also scanned using LED illumination, which provides broader information about the surface of the observed layer, emphasizing its topography.

In this manner, according to the invention, the porosity of the volumetric structure of the material layer is evaluated solely on the basis of surface information obtained from the inspected surface of the layer. Given that the layers in question are thin - which, in the context of this invention, means a thickness of **5 to 300 $\mu$m**, preferably **80 to 130 $\mu$m** - it can be

assumed that the material exhibits a uniform porous structure throughout its thickness. This uniformity allows the surface information to provide representative data for determining the volumetric porosity.

The acquired sets of data obtained from Laser-type illumination and LED-type illumination of the inspected surface, in the form of both types of data, are transmitted to the computing unit, expressed as pixel matrices $P_{i,j}$ corresponding to the entire area of the measured sample. These data are processed in such a manner that the LED-type data and the Laser-type data are first unified with respect to their mutual spatial position, meaning that they are synchronized at the same $i, j$ pixel positions of the pixel matrices $P_{i,j}$. After the unification - that is, synchronization - of the data, channel reduction of both data types, the LED-type data and the Laser-type data, is performed into monochromatic single-channel data (denoted as **PN**) according to Equation (2):

$$PN_{i,j} = \frac{\sum_{k=1}^{3} P_{i,j,k}}{3}, P_{i,j} \in Z \tag{2}$$

In this equation, the pixel values stored in matrix **P** at positions "i" (for the rows of the matrix) and "j" (for the columns of the matrix), and for the channel number "k," are averaged. The pixel positions "i" and "j" belong to the set of natural numbers (denoted as **Z**). The three-channel image is encoded in the **RGB** format, which means that the image is represented as a combination of the colors red ("R"), green ("G"), and blue ("B"). Each channel uses 8-bit encoding (a bit being a digital value of zero or one), which means that each color can take a value from 0 to 255 - providing 256 possible values per channel, i.e. per color.

Subsequently, these images are combined into a three-channel image, where one channel corresponds to the monochromatic Laser-type data, one channel corresponds to the monochromatic LED-type data, and the third channel is null. This creates a macro-image - a data matrix in which each position contains one LED-type value, one Laser-type value, and one zero value (abbreviated as **LeLa0**) - from which data patterns are extracted to form a dataset for further processing.

For applying such data to evaluation by a regression neural network, it is necessary to format the data into the correct structure, referred to as **patterns**. The term *patterns* refers to data samples created from the collected data, with their size precisely defined by the number of pixels determined according to the parameters of the input layer of the regression neural network.

In this manner, the data are divided into patterns through an **extraction of patterns** operation. These patterns represent normalized data describing the physical characteristics of the scanned surface of the inspected sample, where the topographic structures (LED illumination - represented by formalized LED-type data) and the microfacets of the observed surface (Laser illumination - represented by formalized Laser-type data) are emphasized. The form of emphasis is defined by pixels with high brightness values corresponding to integer values greater than 196 in 8-bit encoding.

The patterns are normalized by means of a continuous function to normalized values in the range from 0 to 1 (derived from the integer range 0 to 255 inclusive, providing 256 possible values). These normalized values in the range from 0 to 1 are suitable as input data for the evaluation of patterns by the regression neural network. This optimization of the data evaluation process in the regression neural network preserves the highlighted regions of the inspected surface within the continuous value range from 0.75 to 1 in the form of normalized values.

The patterns are used as the input of the regression neural network, which is trained, validated, and tested on patterns having the same formatting. The regression neural network is implemented within the computing unit. This regression neural network comprises an input layer, followed by convolutional layers, and regression layers connected to the convolutional layers. The output of the regression neural network is the determined porosity value, adjusted to the predefined format. The determined porosity value is stored and displayed in the predefined format. The predefined format may include one or more different formats, such as numerical, textual, one-dimensional graphical, two-dimensional graphical, three-dimensional graphical, or other graphical formats. The process of evaluating the inspected surface is based on assessing the occurrence of highlighted data regions corresponding to the topographic characteristics of the inspected surface emphasized by LED illumination, and highlighted data regions corresponding to microfacets emphasized by Laser illumination.

The result of the proposed solution is the acquisition of a non-destructive method for evaluating the quality and porosity of the inspected surface based on static visual data obtained from laser speckle photometry. This method is implemented using an LSP device that generates both LED-type and Laser-type data.

The advantage of the method according to this invention is that it can be applied directly within a manufacturing environment during the continuous process of thin-layer deposition. As a result, automated and continuous monitoring of the porosity of the produced layer can be performed in real time, without the need for sampling or interruption of the production process. This approach enables in-line inspection of production and allows for early detection of deviations in porosity that could adversely affect the properties of the final product. The method according to the invention therefore contributes to improved quality, efficiency, and reproducibility in the manufacturing of thin-film materials, such as electrodes for electrochemical batteries, while eliminating the need for destructive testing and reducing both material and time losses.

**Brief Description of the Drawings**

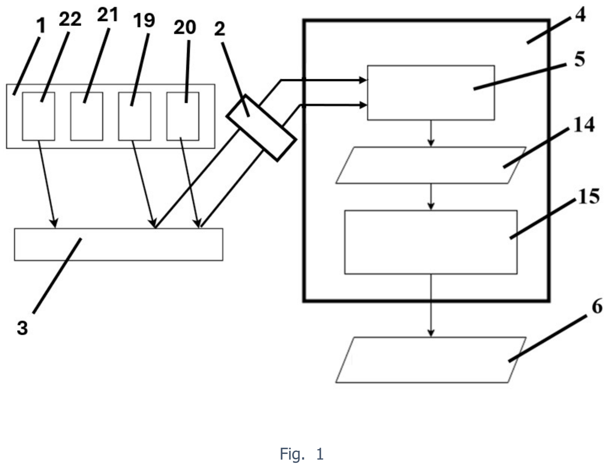

**Figure 1** schematically illustrates the overall process of evaluating the porosity 6 of the inspected surface of a sample 3 by a non-destructive method based on static visual data obtained using a laser speckle photometry device (LSP device 1). The device consists of two lasers - a heating laser 22 and Laser illumination 20 - together with LED illumination 19 and a detector in the form of a camera device 21. The captured data are stored in a data acquisition module 2, and these data are then sent to the computing unit 4. Within the computing unit, the data are processed 5, normalized 14, and, after processing by the regression neural network 15 within the computing unit 4, the porosity value 6 of the surface of the sample 3 is determined.

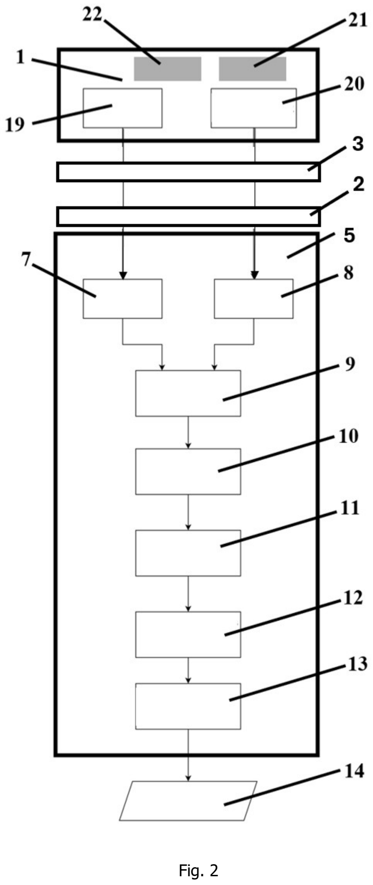

**Figure 2** shows the procedure performed in the computing unit 4 within the data processing section 5, which processes data obtained from the LSP device 1, from the step of synchronization 9 of Laser-type data 8 and LED-type data 7 up to the step of generating normalized values 14 suitable for processing by the regression neural network.

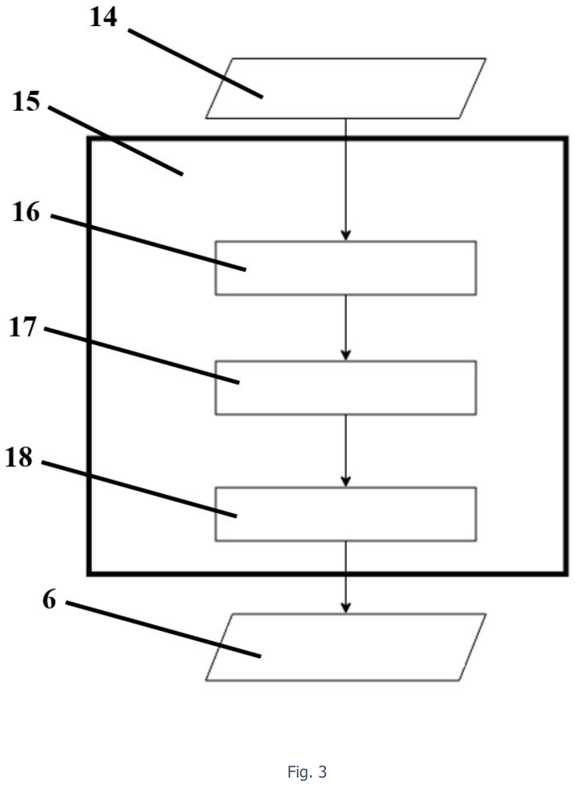

**Figure 3** illustrates the process of processing the normalized values 14 using the trained, validated, and tested regression neural network 15, which comprises an input layer 16, convolutional layers 17, and regression layers 18 of the neural network 15. The output of this processing is the porosity value 6 of the surface of the sample.

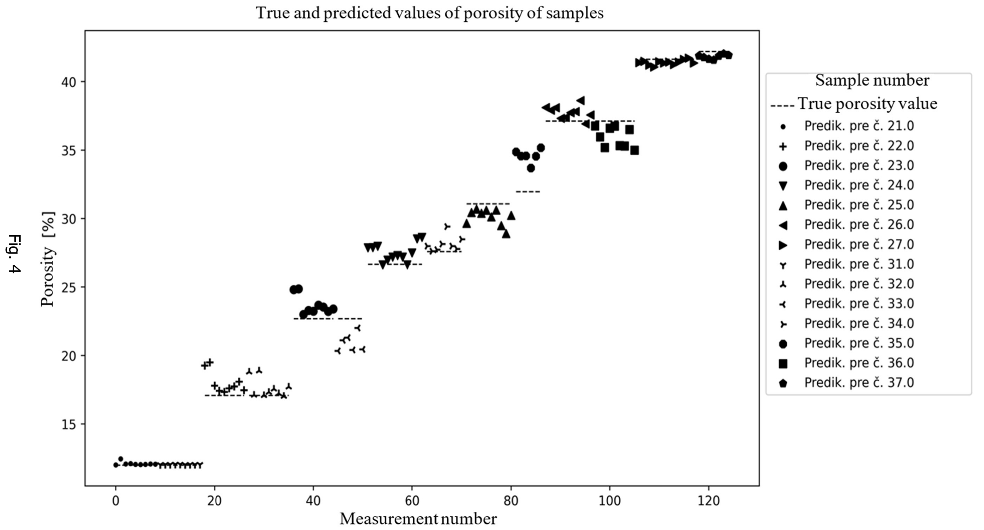

**Figure 4** shows the predicted porosity values of given samples, obtained on the basis of experimental data according to the invention, in comparison with measured values determined in a laboratory using a destructive method.

**Detailed Description**

The determination of the predicted porosity value of the surface of the sample was carried out using a sample of an electrode intended for a cell in an electrochemical battery. The electrode consists of a thin foil on which a layer containing particles of a specific chemical composition is deposited. This layer, composed of particles of various sizes, can be characterized as a layer having a certain degree of porosity. The term *porosity* refers to a certain volume of unfilled space within this layer. From the perspective of functionality, energy characteristics, and the overall quality of electrochemical batteries, it is necessary to evaluate the porosity of the manufactured electrode. The level of porosity significantly affects the fundamental properties of the electrode and, consequently, the overall performance characteristics of the battery.

The determination of the predicted porosity value of the surface of the sample was carried out using the above-described non-destructive method for evaluating the porosity of a thin layer based on static visual data obtained from laser speckle photometry 1, schematically illustrated in Figure 1. The method was implemented using a laser speckle photometry device 1 consisting of two lasers - a heating laser 22 and a Laser illumination 20 - together with an LED illumination 19 and a detector in the form of a camera device 21, which, through data acquisition 2, generated data representing the condition of the inspected surface 3. These data were transmitted to the computing unit 4, where the data processing procedure 5 was executed. The data processing procedure 5 in the computing unit 4 is illustrated in Figure 2. This process involved the processing of input LED-type data 7 and Laser-type data 8. The LED-type data 7 and the Laser-type data 8 underwent a data synchronization process 9. The purpose of this synchronization is to align the corresponding regions of LED-type data 7 and Laser-type data 8 to the same position relative to the actual position of the inspected surface 3. This synchronization can be performed manually, semi-automatically, or automatically, depending on the basic configuration of the inspection device. In the case of laboratory processing of this example, the synchronization of the data was performed manually.

In the next step, a channel reduction 10 was carried out, where the LED-type data 7 and the Laser-type data 8 were transformed from a matrix of dimensions (m,n,3) into a one-channel matrix according to Equation (2), with the dimensions (m,n,1). The subsequent step was the generation of three-channel data of the "LeLa0" type 11, in which an image of dimensions (m,n,3) was generated by combining the LED-type data 7, the Laser-type data 8, and a null matrix of dimensions (m,n,1) into a single image. The inclusion of the null matrix is essential for achieving a three-channel image, which is a standard format widely used in the field of information technology, image data formatting, and related applications. The three-channel image format significantly increases processing efficiency due to the possibility of using standardized and optimized libraries designed for this data structure. The next step consisted of the extraction of patterns 12 from the three-channel data. This term refers to the extraction of subsets from the three-channel "LeLa0" data 11. The following step was the normalization of patterns 13, in which the values contained in the matrices designated as extracted patterns were converted from integer values to real-number values in the range from 0 to 1 inclusive. This resulted in normalized values 14, which were then input into the regression neural network 15. The regression neural network consists of an input layer 16, followed by convolutional neural layers 17, and a sequence of regression layers 18 connected to the final convolutional layer. The sequence of regression layers 18 may consist of layers formed as fully connected layers or as one-dimensional convolutional layers 17. The result of the evaluation process of the normalized values 14 by the regression neural network 15 was the generated predicted porosity value 6.

Ten determinations of the predicted porosity value 6 were carried out on fourteen types of samples. The determination of the predicted porosity values 6 in all performed examples was carried out using the above-described method.

The experimental results are demonstrated on fourteen types of samples with porosity values ranging from 11.99% to 42.21%. The obtained results are presented in Table 1 and shown in Figure 4, which displays the predicted porosity values 6 corresponding to the normalized values 14 representing the images of the inspected surface 3 and compares them with the actual laboratory-determined porosity values obtained through a destructive evaluation of the samples using computed tomography. The values generated by computed tomography are indicated by dashed lines in Figure 4. The corresponding predicted porosity values are represented by various symbols according to the different sample types. The resulting median error of the predicted porosity value, rounded to two decimal places, was only 0.85% (as shown in Table 1 under "Average prediction error value"), which satisfies the qualitative conditions for integrating the method into a production system and confirms the cost-effectiveness of implementing such a method.

**Table 1** - Predicted porosity values (%), absolute mean errors (%) of the predicted porosity values for specific samples relative to the theoretically exact (actual) porosity values (%) of the samples:

| Sample No. | Actual porosity value (%) | Predicted porosity value (%) | Porosity prediction error | Absolute porosity prediction error | Average prediction error (per sample) |
|---|---|---|---|---|---|
| 21 | 11,99 | 12,016855 | 0,026855 | 0,026855 | |
| 21 | 11,99 | 12,44959553 | 0,459595531 | 0,459595531 | |
| 21 | 11,99 | 12,0795968 | 0,0895968 | 0,0895968 | |
| 21 | 11,99 | 12,10769789 | 0,117697886 | 0,117697886 | |
| 21 | 11,99 | 12,05011683 | 0,060116829 | 0,060116829 | 0,113943534 |
| 21 | 11,99 | 12,04195963 | 0,051959629 | 0,051959629 | |
| 21 | 11,99 | 12,05738547 | 0,067385471 | 0,067385471 | |
| 21 | 11,99 | 12,0730048 | 0,0830048 | 0,0830048 | |
| 21 | 11,99 | 12,05927986 | 0,069279857 | 0,069279857 | |
| 31 | 11,99 | 12,03034623 | 0,040346229 | 0,040346229 | |
| 31 | 11,99 | 12,03804614 | 0,04804614 | 0,04804614 | |
| 31 | 11,99 | 12,03756267 | 0,047562671 | 0,047562671 | |
| 31 | 11,99 | 12,04806061 | 0,058060614 | 0,058060614 | |
| 31 | 11,99 | 12,05162991 | 0,061629914 | 0,061629914 | 0,048339198 |
| 31 | 11,99 | 12,02921806 | 0,039218057 | 0,039218057 | |
| 31 | 11,99 | 12,03955381 | 0,049553814 | 0,049553814 | |
| 31 | 11,99 | 12,03451761 | 0,044517614 | 0,044517614 | |
| 31 | 11,99 | 12,03611773 | 0,046117729 | 0,046117729 | |

(continued)

| Sample No. | Actual porosity value (%) | Predicted porosity value (%) | Porosity prediction error | Absolute porosity prediction error | Average prediction error (per sample) |
|---|---|---|---|---|---|
| 22 | 17,09 | 19,26412149 | 2,174121486 | 2,174121486 | 0,930329182 |
| 22 | 17,09 | 19,49206604 | 2,402066042 | 2,402066042 | |
| 22 | 17,09 | 17,79049566 | 0,700495657 | 0,700495657 | |
| 22 | 17,09 | 17,41683363 | 0,326833629 | 0,326833629 | |
| 22 | 17,09 | 17,33562771 | 0,245627714 | 0,245627714 | |
| 22 | 17,09 | 17,59538943 | 0,505389429 | 0,505389429 | |
| 22 | 17,09 | 17,74333854 | 0,653338543 | 0,653338543 | |
| 22 | 17,09 | 18,08929357 | 0,999293571 | 0,999293571 | |
| 22 | 17,09 | 17,45579657 | 0,365796571 | 0,365796571 | |
| 32 | 17,09 | 18,79989977 | 1,709899771 | 1,709899771 | 0,563608154 |
| 32 | 17,09 | 17,11872924 | 0,02872924 | 0,02872924 | |
| 32 | 17,09 | 18,88534871 | 1,795348714 | 1,795348714 | |
| 32 | 17,09 | 17,08454706 | -0,005452943 | 0,005452943 | |
| 32 | 17,09 | 17,33020317 | 0,240203171 | 0,240203171 | |
| 32 | 17,09 | 17,56595077 | 0,475950771 | 0,475950771 | |
| 32 | 17,09 | 17,22508831 | 0,135088314 | 0,135088314 | |
| 32 | 17,09 | 17,02872629 | -0,061273714 | 0,061273714 | |
| 32 | 17,09 | 17,71052674 | 0,620526743 | 0,620526743 | |
| 23 | 22,69 | 24,80388894 | 2,113888943 | 2,113888943 | 0,979961114 |
| 23 | 22,69 | 24,86654674 | 2,176546743 | 2,176546743 | |
| 23 | 22,69 | 23,00203417 | 0,312034171 | 0,312034171 | |
| 23 | 22,69 | 23,28646649 | 0,596466486 | 0,596466486 | |
| 23 | 22,69 | 23,23866863 | 0,548668629 | 0,548668629 | |
| 23 | 22,69 | 23,68217969 | 0,992179686 | 0,992179686 | |
| 23 | 22,69 | 23,53802554 | 0,848025543 | 0,848025543 | |
| 23 | 22,69 | 23,21584797 | 0,525847971 | 0,525847971 | |
| 23 | 22,69 | 23,39599186 | 0,705991857 | 0,705991857 | |
| 33 | 22,69 | 20,34491186 | -2,345088143 | 2,345088143 | 1,750015353 |
| 33 | 22,69 | 21,11190985 | -1,578090146 | 1,578090146 | |
| 33 | 22,69 | 21,30483891 | -1,385161086 | 1,385161086 | |
| 33 | 22,69 | 20,41213031 | -2,277869686 | 2,277869686 | |
| 33 | 22,69 | 22,01752866 | -0,672471343 | 0,672471343 | |
| 33 | 22,69 | 20,44858829 | -2,241411714 | 2,241411714 | |

(continued)

| Sample No. | Actual porosity value (%) | Predicted porosity value (%) | Porosity prediction error | Absolute porosity prediction error | Average prediction error (per sample) |
|---|---|---|---|---|---|
| 24 | 26,66 | 27,86931714 | 1,209317143 | 1,209317143 | 0,875156679 |
| 24 | 26,66 | 27,87615544 | 1,216155438 | 1,216155438 | |
| 24 | 26,66 | 27,98283263 | 1,322832629 | 1,322832629 | |
| 24 | 26,66 | 26,62144734 | -0,038552657 | 0,038552657 | |
| 24 | 26,66 | 26,96528849 | 0,305288486 | 0,305288486 | |
| 24 | 26,66 | 27,18896563 | 0,528965629 | 0,528965629 | |
| 24 | 26,66 | 27,30450766 | 0,644507657 | 0,644507657 | |
| 24 | 26,66 | 27,19160351 | 0,531603514 | 0,531603514 | |
| 24 | 26,66 | 26,61681026 | -0,043189743 | 0,043189743 | |
| 24 | 26,66 | 27,49687706 | 0,836877057 | 0,836877057 | |
| 24 | 26,66 | 28,52120874 | 1,861208743 | 1,861208743 | |
| 24 | 26,66 | 28,62338146 | 1,963381457 | 1,963381457 | |
| 34 | 27,59 | 27,99104637 | 0,401046371 | 0,401046371 | 0,557331722 |
| 34 | 27,59 | 27,6257786 | 0,035778604 | 0,035778604 | |
| 34 | 27,59 | 27,72412254 | 0,134122543 | 0,134122543 | |
| 34 | 27,59 | 28,14633331 | 0,556333314 | 0,556333314 | |
| 34 | 27,59 | 29,42107697 | 1,831076971 | 1,831076971 | |
| 34 | 27,59 | 27,99429251 | 0,404292514 | 0,404292514 | |
| 34 | 27,59 | 27,78344157 | 0,193441571 | 0,193441571 | |
| 34 | 27,59 | 28,49256189 | 0,902561886 | 0,902561886 | |
| 25 | 31,08 | 29,65802851 | -1,421971486 | 1,421971486 | 0,962804117 |
| 25 | 31,08 | 30,44006643 | -0,639933571 | 0,639933571 | |
| 25 | 31,08 | 30,69799269 | -0,382007314 | 0,382007314 | |
| 25 | 31,08 | 30,38608131 | -0,693918686 | 0,693918686 | |
| 25 | 31,08 | 30,6064768 | -0,4735232 | 0,4735232 | |
| 25 | 31,08 | 30,12869626 | -0,951303743 | 0,951303743 | |
| 25 | 31,08 | 30,62325397 | -0,456746029 | 0,456746029 | |
| 25 | 31,08 | 29,49116289 | -1,588837114 | 1,588837114 | |
| 25 | 31,08 | 28,90264611 | -2,177353886 | 2,177353886 | |
| 25 | 31,08 | 30,23755386 | -0,842446143 | 0,842446143 | |
| 35 | 31,96 | 34,87232223 | 2,912322229 | 2,912322229 | 2,611105767 |
| 35 | 31,96 | 34,55995892 | 2,599958917 | 2,599958917 | |
| 35 | 31,96 | 34,58382234 | 2,623822343 | 2,623822343 | |
| 35 | 31,96 | 33,6882114 | 1,7282114 | 1,7282114 | |
| 35 | 31,96 | 34,54689263 | 2,586892629 | 2,586892629 | |
| 35 | 31,96 | 35,17542709 | 3,215427086 | 3,215427086 | |

(continued)

| Sample No. | Actual porosity value (%) | Predicted porosity value (%) | Porosity prediction error | Absolute porosity prediction error | Average prediction error (per sample) |
|---|---|---|---|---|---|
| 26 | 37,13 | 38,1086696 | 0,9786696 | 0,9786696 | |
| 26 | 37,13 | 37,9163901 | 0,786390104 | 0,786390104 | |
| 26 | 37,13 | 38,10031737 | 0,970317371 | 0,970317371 | |
| 26 | 37,13 | 37,31374186 | 0,183741857 | 0,183741857 | |
| 26 | 37,13 | 37,3860356 | 0,2560356 | 0,2560356 | 0,661434145 |
| 26 | 37,13 | 37,73664429 | 0,606644286 | 0,606644286 | |
| 26 | 37,13 | 37,8201482 | 0,6901482 | 0,6901482 | |
| 26 | 37,13 | 38,61562871 | 1,485628714 | 1,485628714 | |
| 26 | 37,13 | 36,91826511 | -0,211734886 | 0,211734886 | |
| 26 | 37,13 | 37,57503083 | 0,445030829 | 0,445030829 | |
| 36 | 37,13 | 36,76743703 | -0,362562971 | 0,362562971 | |
| 36 | 37,13 | 35,96626219 | -1,163737813 | 1,163737813 | |
| 36 | 37,13 | 35,18460517 | -1,945394829 | 1,945394829 | |
| 36 | 37,13 | 36,59713603 | -0,532863971 | 0,532863971 | |
| 36 | 37,13 | 36,75371529 | -0,376284714 | 0,376284714 | 1,198610932 |
| 36 | 37,13 | 35,32205197 | -1,807948029 | 1,807948029 | |
| 36 | 37,13 | 35,2930046 | -1,8369954 | 1,8369954 | |
| 36 | 37,13 | 36,49743774 | -0,632562257 | 0,632562257 | |
| 36 | 37,13 | 35,0008516 | -2,1291484 | 2,1291484 | |
| 27 | 41,63 | 41,38488874 | -0,245111257 | 0,245111257 | |
| 27 | 41,63 | 41,48661904 | -0,143380958 | 0,143380958 | |
| 27 | 41,63 | 41,20257517 | -0,427424829 | 0,427424829 | |
| 27 | 41,63 | 41,07073326 | -0,559266743 | 0,559266743 | |
| 27 | 41,63 | 41,46369457 | -0,166305429 | 0,166305429 | |
| 27 | 41,63 | 41,35659691 | -0,273403086 | 0,273403086 | |
| 27 | 41,63 | 41,43109931 | -0,198900686 | 0,198900686 | 0,247522858 |
| 27 | 41,63 | 41,24596069 | -0,384039314 | 0,384039314 | |
| 27 | 41,63 | 41,42451406 | -0,205485943 | 0,205485943 | |
| 27 | 41,63 | 41,62437026 | -0,005629743 | 0,005629743 | |
| 27 | 41,63 | 41,71629374 | 0,086293743 | 0,086293743 | |
| 27 | 41,63 | 41,35496743 | -0,275032571 | 0,275032571 | |
| 37 | 42,21 | 41,87934131 | -0,330658686 | 0,330658686 | |
| 37 | 42,21 | 41,76923052 | -0,44076948 | 0,44076948 | |
| 37 | 42,21 | 41,648819 | -0,561181 | 0,561181 | |
| 37 | 42,21 | 41,58361689 | -0,626383114 | 0,626383114 | 0,39287526 |
| 37 | 42,21 | 41,87413234 | -0,335867657 | 0,335867657 | |
| 37 | 42,21 | 42,03532374 | -0,174676257 | 0,174676257 | |
| 37 | 42,21 | 41,92940937 | -0,280590629 | 0,280590629 | |

(continued)

| Sample No. | Actual porosity value (%) | Predicted porosity value (%) | Porosity prediction error | Absolute porosity prediction error | Average prediction error (per sample) |
|---|---|---|---|---|---|
| Overall average predicted porosity | | | | | 0,849502715 |

The above-described non-destructive method for evaluating porosity can be implemented directly within an electrode manufacturing system, where the device comprises a system of rollers through which a thin foil passes, onto which a layer containing microparticles of specific chemical composition is deposited to form an electrode for a cell in an electrochemical battery. This layer consists of particles of various sizes. From the perspective of functionality, energy characteristics, and the overall quality of electrochemical batteries, it is necessary to evaluate the porosity of the manufactured electrode. The level of porosity significantly influences the fundamental properties of the electrode and, consequently, the overall performance of the battery. The most critical properties of the electrode are volumetric and gravimetric energy density. For this reason, it is essential to integrate an inspection system into the manufacturing equipment to ensure 100% monitoring of production quality, thereby enabling determination of the key characteristics of the finished product in the form of an electrochemical battery.

**Industrial Applicability**

The non-destructive method for evaluating the porosity of a thin layer based on static visual data from laser speckle photometry can be used in industrial applications where monitoring, quality assessment, and determination of specific properties of a deposited porous layer are required. In particular, it is applicable to the production of electrodes intended for the manufacture of batteries for electric vehicles.

**List of Reference Signs:**

1    LSP device (laser speckle photometry device)
2    Data acquisition
3    Inspected surface
4    Computing unit
5    Data processing
6    Predicted porosity value
7    LED-type data
8    Laser-type data
9    Data synchronization
10   Channel reduction
11   Generation of three-channel "LeLa0" data
12   Pattern extraction
13   Pattern normalization
14   Normalized values
15   Regression neural network
16   Input layer
17   Convolutional layers
18   Regression layers
19   LED illumination
20   Laser illumination
21   Camera device
22   Heating laser

**Claims**

1. A computer-implemented method for non-destructive determination of the porosity of a thin layer, **characterized in that** it comprises the following steps:

(a) acquiring static visual data of Laser type and LED type from a laser speckle photometry device arranged to illuminate a surface of the thin layer by a laser and an LED and to capture the reflected light field;
(b) processing the acquired data in a computing unit, wherein the processing includes:

- spatial synchronization of the Laser-type data and the LED-type data;
- reduction of the channels of the Laser-type data and the LED-type data into monochromatic single-channel data if the acquired data are in a multichannel format, wherein, in the case of single-channel data, the channel reduction is not performed;
- generation of three-channel data, wherein one channel comprises monochromatic Laser-type data, a second channel comprises monochromatic LED-type data, and a third channel is null;
- extraction of data patterns;
- normalization of the data patterns; and
- processing of the normalized data patterns using a trained, validated and tested regression neural network, wherein the output of processing is the porosity value of the thin layer.

2. The computer-implemented method for non-destructive determination of the porosity of a thin layer, according to claim 1, **characterized in that** the step of processing the normalized data patterns using the trained, validated and tested regression neural network comprises:

- processing the normalized data patterns by an input layer of the neural network,
- processing the outputs from the input layer of the neural network by convolutional layers of the neural network,
- processing the outputs from the convolutional layers of the neural network by regression layers of the neural network; and optionally
- recording the resulting value and displaying it in a predefined format.

Fig. 1

Fig. 2

Fig. 3

True and predicted values of porosity of samples

Sample number
- - - - True porosity value
•   Predik. pre č. 21.0
+   Predik. pre č. 22.0
●   Predik. pre č. 23.0
▼   Predik. pre č. 24.0
▲   Predik. pre č. 25.0
◄   Predik. pre č. 26.0
►   Predik. pre č. 27.0
Y   Predik. pre č. 31.0
⅄   Predik. pre č. 32.0
⋊   Predik. pre č. 33.0
⋉   Predik. pre č. 34.0
●   Predik. pre č. 35.0
■   Predik. pre č. 36.0
⬟   Predik. pre č. 37.0

Fig. 4

EP 4 729 927 A1

16

Europäisches
Patentamt

European
Patent Office

Office européen
des brevets

## EUROPEAN SEARCH REPORT

**Application Number**

EP 25 20 9622

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 163 624 A1 (FRAUNHOFER GES FORSCHUNG [DE]) 12 April 2023 (2023-04-12) * paragraphs [0001], [0009] - [0010], [0012] - [0015], [0027], [0036] - [0038]; figure 2 * | 1,2 | INV. G01N21/47 G01N21/84 G01N15/08 |
| A | DE 10 2021 208775 B3 (FRAUNHOFER GES FORSCHUNG [DE]) 6 October 2022 (2022-10-06) * paragraphs [0016] - [0023], [0035] - [0037] * | 1,2 | |
| A | US 2019/318469 A1 (WANG XINGZE [US]) 17 October 2019 (2019-10-17) * paragraphs [0001], [0007] - [0010]; figures 5,6 * | 1,2 | |
| A | DANG DAVID ET AL: "Investigation of the Roughness Influence on the Absorption Behavior of additively manufactured Metals by the Laser Speckle Photometry", 2021 44TH INTERNATIONAL SPRING SEMINAR ON ELECTRONICS TECHNOLOGY (ISSE), IEEE, 5 May 2021 (2021-05-05), pages 1-6, XP033936801, DOI: 10.1109/ISSE51996.2021.9467607 [retrieved on 2021-06-28] * abstract; figure 1 * | 1,2 | |
| A | WO 2011/153973 A1 (FRAUNHOFER GES FORSCHUNG [DE]; SCHREIBER JUERGEN [DE] ET AL.) 15 December 2011 (2011-12-15) * figure 1 * | 1,2 | |

TECHNICAL FIELDS
SEARCHED     (IPC)

G01N

-/--

The present search report has been drawn up for all claims

| Place of search | Date of completion of the search | Examiner |
|---|---|---|
| Munich | 4 February 2026 | Meacher, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

**EUROPEAN SEARCH REPORT**

Application Number

EP 25 20 9622

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHEN LILI ET AL: "Laser speckle photometry - Optical sensor systems for condition and process monitoring", MATERIALPRUEFUNG, 1 March 2019 (2019-03-01), pages 213-219, XP055975020, DE ISSN: 0025-5300, DOI: 10.3139/120.111308 Retrieved from the Internet: URL:http://dx.doi.org/10.3139/120.111308> * Digital algorithms; page 215; figure 1 * ----- | 1,2 | |

TECHNICAL FIELDS
SEARCHED    (IPC)

The present search report has been drawn up for all claims

| Place of search | Date of completion of the search | Examiner |
|---|---|---|
| Munich | 4 February 2026 | Meacher, David |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 20 9622

This annex lists the patent family members relating to the patent documents cited in  the above-mentioned European search report.
The members are as contained in the European Patent Office EDP file on
The European Patent Office is in no way liable for these particulars which are merely given for the purpose of information.

04-02-2026

| Patent document cited in search report | Publication date | Patent family member(s) | Publication date |
|---|---|---|---|
| EP 4163624 A1 | 12-04-2023 | NONE | |
| DE 102021208775 B3 | 06-10-2022 | DE 102021208775 B3<br>US 2025137937 A1<br>WO 2023017029 A1 | 06-10-2022<br>01-05-2025<br>16-02-2023 |
| US 2019318469 A1 | 17-10-2019 | NONE | |
| WO 2011153973 A1 | 15-12-2011 | EP 2580570 A1<br>KR 20130118290 A<br>WO 2011153973 A1 | 17-04-2013<br>29-10-2013<br>15-12-2011 |

EPO FORM P0459

For more details about this annex : see Official Journal of the European Patent Office, No. 12/82

**REFERENCES CITED IN THE DESCRIPTION**

**Patent documents cited in the description**

- US 8542793 B1
- US 11796442 B2
- CN 108332674 B
- US 11654635 B2
- EP 4060766 A1
- US 9116504 B2
- US 11181363 B2
- WO 2023017029 A1
- EP 4163624 A1

**Non-patent literature cited in the description**

- **Z. ZHANG et al.** Characterizing Batteries by In Situ Electrochemical Atomic Force Microscopy: A Critical Review. *Adv. Energy Mater.*, October 2021, vol. 11 (38), 2101518
- **S. Y. LUCHKIN** ; **S. A. LIPOVSKIKH** ; **N. S. KATOROVA** ; **A. A. SAVINA** ; **A. M. ABAKUMOV** ; **K. J. STEVENSON**. *Solid-electrolyte interphase nucleation and growth on carbonaceous negative electrodes for Li-ion batteries visualized with in situ atomic force microscopy*
- **U. KLEMENT** ; **J. EKBERG** ; **S. T. KELLY**. 3D Analysis of Porosity in a Ceramic Coating Using X-ray Microscopy. *J. Therm. Spray Technol.*, February 2017, vol. 26 (3), 456-463